# EUROPÄISCHE PATENTSCHRIFT

(11) **EP 3 402 000 B1**
(45) Veröffentlichungstag und Bekanntmachung des Hinweises auf die Patenterteilung: **26.02.2020**
(21) Anmeldenummer: 17305548.4
(22) Anmeldetag: 12.05.2017
(51) Int. Cl.: H02G 15/34, H01R 4/68

(54) **VORRICHTUNG ZUR VERBINDUNG SUPRALEITENDER KABEL**
DEVICE FOR CONNECTION OF SUPERCONDUCTING CABLE
DISPOSITIF DESTINÉ À RELIER DES CÂBLES SUPRACONDUCTEURS

(43) Veröffentlichungstag der Anmeldung: 14.11.2018
(73) Patentinhaber: Nexans, 92400 Courbevoie (FR)
(72) Erfinder: STEMMLE, Mark, 30175 Hannover (DE); LALLOUET, Nicolas, 62132 FIENNES (FR); DELPLACE, Sébastien, 59279 LOON-PLAGE (FR)
(74) Vertreter: Feray, Valérie

(56) Entgegenhaltungen:
- EP-A1- 2 202 762
- EP-A1- 2 403 087
- EP-A1- 2 830 160

## Beschreibung

Die Erfindung bezieht sich auf eine Vorrichtung mit zwei supraleitfähigen Kabeln, die an einer Verbindungsstelle elektrisch leitend miteinander verbunden werden, gemäß dem Oberbegriff des Patentanspruchs 1.

Eine solche Vorrichtung ist beispielsweise in der EP 2 830 160 A1 beschrieben. Ein supraleitfähiges Einleiterkabel hat einen elektrischen Leiter aus Material, welches bei ausreichend tiefen Temperaturen in den supraleitfähigen Zustand übergeht. Ein Schirmleiter umgibt den elektrischen Leiter konzentrisch und ist von diesem durch eine Isolierschicht getrennt angeordnet. Die beiden Leiter sind in einer thermisch isolierenden Hülle angeordnet, in welcher sich ein Kühlmittel befindet. Geeignete Kühlmittel sind beispielsweise Stickstoff oder Helium im flüssigen Zustand.

Bekannte Vorrichtungen zur Verbindung von zwei supraleitfähigen Kabeln bestehen beispielsweise aus einer um die verbundenen elektrischen Leiter gewickelten Isolierung aus Papierbändern sowie aus einem um die verbundenen Schirmleiter geschweißten Kryostaten. Die Herstellung einer solchen Verbindung ist damit sehr aufwendig und kann nur am Installationsort vorgenommen werden. Weiterhin sind Reparaturarbeiten an der Verbindungsstelle oder das Austauschen der Kabel nicht möglich, ohne die Vorrichtung zu zerstören.

Aus der EP 2 202 762 B1 geht eine Anordnung mit einem supraleitfähigen Kabel hervor, das in einem Kryostat angeordnet ist. Der Kryostat besteht aus zwei konzentrisch zueinander angeordneten Rohren zwischen denen eine Vakuumisolierung angeordnet ist. Das supraleitfähige Kabel ist von einem supraleitfähigen Schirm aus einem Material umgeben, dessen elektrischer Widerstandswert in normalleitendem Zustand um einen Faktor von mindestens 50 höher ist als der elektrische Widerstandswert des für den Leiter des Kabels verwendeten Materials in normalleitendem Zustand.

Die EP 2 403 087 B1 beschreibt eine Verbindungsanordnung für zwei papierisolierte Hochspannungskabel. An den Enden der beiden Kabel wird für beide Kabel jeweils ein von einem druckfesten Schottisolator umgebener Endenabschluß angeordnet. Auf den Enden der Leiter wird jeweils ein mit einer planen Stirnfläche versehenes Anschlußelement montiert. Die Enden der beiden Leiter werden so positioniert, dass die planen Anschlußelemente mit ihren Stirnflächen aneinander liegen. Die beiden Anschlußelemente werden durch einen dicht an denselben anliegenden Metallring elektrisch leitend miteinander verbunden, der mit seiner Außenfläche dicht an einer die Verbindungsstelle umgebenden Abschirmelektrode anliegt.

Aus der eingangs erwähnten EP 2 830 160 A1 geht eine Vorrichtung hervor, in der zwei jeweils in einem Kryostat angeordnete, supraleitfähige Kabel elektrisch leitend miteinander verbunden werden. Die Kabel haben jeweils mindestens zwei konzentrisch zueinander angeordnete, von einem Dielektrikum umgebene supraleitfähige Leiter und einen über dem außen liegenden Dielektrikum angeordneten elektrischen Schirm. Zur Durchführung der Verbindung werden die Leiter der beiden Kabel von umgebenden Schichten befreit. Die Enden der Leiter werden dann so positioniert, dass sie in entgegengesetzte Richtung weisen und dass ihre Leiter zumindest annähernd in gleicher Höhe nebeneinander liegen. In dieser Position werden die beiden Kabel relativ zueinander festgelegt. Je zwei Leiter der beiden Kabel werden danach durch quer verlaufende Kontaktelemente elektrisch leitend miteinander verbunden. Die Schirme der beiden Kabel werden separat über ein Verbindungselement durchverbunden. Die so entstandene Verbindungseinheit wird in einem als Gehäuse ausgeführten Kryostat untergebracht, der mit den Kryostaten der beiden Kabel verbunden wird.

Der Erfindung liegt die Aufgabe zugrunde, eine Vorrichtung zur Verbindung zweier supraleitfähiger Kabel bereitzustellen, welche schnell und einfach aufgebaut und, wenn notwendig, wieder auseinandergebaut werden kann.

Diese Aufgabe wird durch eine Vorrichtung mit den Merkmalen des Patentanspruchs 1 gelöst.

Die erfindungsgemäße Vorrichtung erlaubt einen besonders schnellen und einfachen Aufbau der Verbindung zweier supraleitfähiger Kabel. Die Montage der Vorrichtung ist deshalb besonders kostengünstig. Zur Reparatur oder zum Austauschen eines der Kabel kann die Vorrichtung ebenso schnell und einfach auseinandergebaut und anschließend wiederhergestellt werden, ohne dass Teile der Vorrichtung ersetzt werden müssen. Die Kabelenden können bereits am Herstellungsort vorbereitet werden, indem sie mit den Verbindungselementen versehen werden. Am Installationsort müssen diese dann nur noch innerhalb des Schirmkörpers zusammengesteckt werden. Der vorgefertigte Muffenkryostat erlaubt ein Anbringen desselben, bei welchem nur wenig geschweißt werden muß.

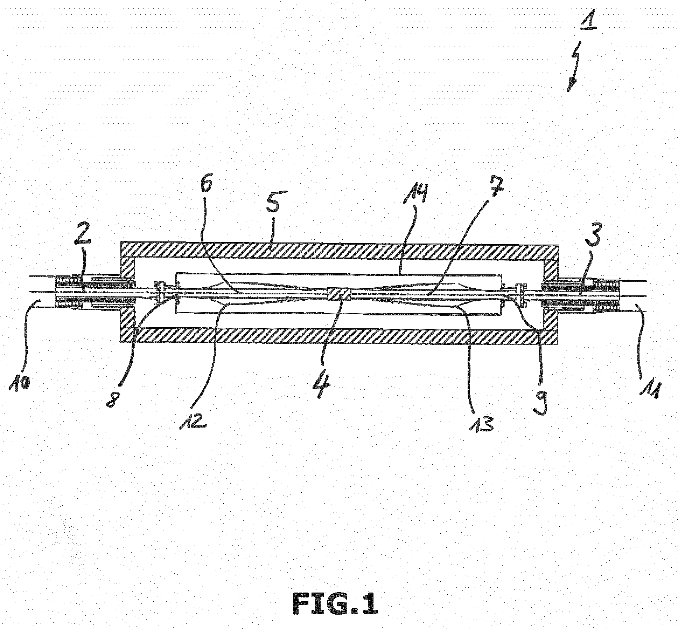

Ein Ausführungsbeispiel des Erfindungsgegenstandes ist in der Zeichnung dargestellt. Fig. 1 zeigt einen Schnitt durch eine Vorrichtung für eine Verbindungsstelle nach der Erfindung.

Die elektrischen Leiter zweier miteinander verbundener supraleitfähiger Einleiterkabel 2 und 3 sind an der Verbindungsstelle 4 elektrisch leitend miteinander verbunden. Die erfindungsgemäße Vorrichtung 1 zur Verbindung der Einleiterkabel 2 und 3 umfaßt einen Muffenkryostat 5, welcher die Verbindungsstelle 4 umgibt. Die supraleitfähigen Einleiterkabel 2 und 3 haben jeweils einen elektrischen Leiter 6 bzw. 7 bzw. eine Ader und einen elektrischen Schirmleiter 8 bzw. 9. Die elektrischen Leiter 6 und 7 können zusätzlich zu dem supraleitfähigen Material auch metallische Materialien aufweisen. Die Schirmleiter 8 und 9 bestehen mit Vorteil aus supraleitfähigem Material oder aus supraleitfähigem und metallischem Materialien. Die Einleiterkabel 2 und 3 sind jeweils von einem Kryostat 10 bzw. 11 umgeben, welcher die elektrischen Leiter 2 bzw. 3 auf die zur Supraleitung benötigte tiefe Temperatur kühlt.

An den Kabelenden sind an den Leitern 6 und 7 jeweils Verbindungsteile angeordnet. Diese Verbindungsteile oder -elemente können komplementäre Teile einer Steckverbindung wie beispielsweise ein Stift einerseits und eine Buchse andererseits sein. Die Verbindungsteile können auch identische Steckkontakte sein, welche innerhalb einer Hülse an der Verbindungsstelle 4 zusammengeführt sind. Weiterhin können beispielweise Verbindungshülsen jeweils an den elektrischen Leiter und den Schirmleiter angelötet oder mit diesen verschweißt werden.

Die beiden Enden der elektrischen Leiter 6 und 7 sind jeweils mit Feldsteuerungselektroden 12 bzw. 13 versehen. Die Feldsteuerungselektroden 12 und 13 sind notwendig, um lokale Feldstärkeüberhöhungen an den Leiterenden zu verhindern. Nach anderen Ausführungsbeispielen kann die Feldsteuerung auch als kapazitive Feldsteuerung ausgeführt sein, welche aus einer Anordnung aus leitenden Einlagen besteht.

Die Verbindungsstelle 4 ist innerhalb des Muffenkryostats 5 von einem elektrischen Schirm 14 umgeben. Der elektrische Schirm 14 ist mit den elektrischen Schirmleitern 8 und 9 der Einleiterkabel 2 und 3 verbunden, sodass die Schirmleiter 8 und 9 ebenfalls elektrisch leitend miteinander verbunden sind. Damit ist die Schirmwirkung an der Verbindungsstelle 4 nicht unterbrochen. Der Schirm 14 liegt in der Form eines Schirmkörpers vor. Der Schirmkörper 14 ist ein Rohr, welches an seinen Enden Öffnungen zum Einstecken der Leiterenden hat. Der Schirmkörper kann beispielsweise aus einem metallischen oder nichtmetallischen Trägerrohr bestehen, auf welches von außen supraleitfähige Leiter aufgebracht sind.

Der Muffenkryostat 5 besteht mit Vorteil aus zwei konzentrisch zueinander angeordneten Metallrohren, zwischen welchen sich eine thermische Isolierung befindet. Dadurch wird sichergestellt, dass die von den Kabelkryostaten 10 und 11 bewirkte thermische Isolierung der Einleiterkabel 2 und 3 an der Verbindungsstelle 4 nicht unterbrochen wird. Ein geeignetes Metall ist beispielsweise Edelstahl. Die thermische Isolierung des Muffenkryostats 5 ist mit Vorteil eine Vakuumisolierung. Der Muffenkryostat 5 besteht mit Vorteil aus vorgefertigten Kryostatteilen, welche mit Flanschen versehen und jeweils an die Kabelkryostate 10 und 11 angeflanscht sind. Die vorgefertigten Kryostatteile, beispielsweise zwei Rohre, werden zunächst auf das Ende eines Einleiterkabels 2 bzw. 3 geschoben und nach Herstellung der Kabelverbindung in die Montageposition gebracht, in welcher sie mit den Enden der Kabelkryostate 10 und 11 verschweißt oder anderweitig mechanisch festgelegt werden.

Bei der Montage der erfindungsgemäßen Vorrichtung zum Verbinden von zwei supraleitfähigen Kabeln kann beispielsweise wie folgt vorgegangen werden.

Zunächst werden jeweils die Enden der elektrischen Schirmleiter 8 und 9 der beiden Einleiterkabel 2 und 3 auf vorgegebener Länge von ihren Isolierungen befreit. Anschließend werden die Schirmleiter 8 und 9 und die Isolierungen der elektrischen Leiter 6 und 7 auf vorgegebener Länge ebenfalls entfernt. An die freigelegten Enden der elektrischen Leiter 6 und 7 wird jeweils ein Verbindungselement angebracht. Das Anbringen kann in bekannter Technik, beispielsweise durch Löten oder Schweißen, geschehen. Die Verbindungselemente sind entweder ein Stecker und eine Buchse oder zwei Stecker. Die Leiterenden können mit Vorteil schon am Herstellungsort vor dem Transport der Einleiterkabel 2 und 3 zum Installationsort wie beschrieben vorbereitet und mit den Verbindungselementen versehen werden. Am Installationsort werden die elektrischen Leiter 6 und 7 mittels der Verbindungselemente miteinander verbunden. Beispielsweise werden der Stecker und die Buchse zusammengesteckt. Im Falle von zwei Steckern werden diese innerhalb einer Hülse elektrisch leitend miteinander verbunden. Das Verbinden der elektrischen Leiter 6 und 7 wird dabei mit Vorteil innerhalb des vorgefertigten Schirmkörpers 14 ausgeführt. Beispielsweise werden Leiterenden auf gegenüberliegenden Seiten in den Schirmkörper 14 eingeführt und zusammengesteckt, oder beide Leiterenden werden innerhalb des Schirmkörpers 14 in eine darin befindliche Hülse eingesteckt. Dabei werden gleichzeitig die beiden elektrischen Schirmleiter mit dem Schirmkörper 14, z.B. mittels Kontaktelementen, verbunden.

Anschließend wird der Muffenkryostat 5 um die mit dem Schirmkörper 14 versehene Verbindungsstelle 4 herum angebracht. Es werden mit Vorteil vorgefertigte Kryostatteile an die beiden Kabelkryostate 10 und 11 angeflanscht. Anschließend werden die Kryostatteile miteinander verschweißt. Die verbundenen Kryostatteile bilden den Muffenkörper 5, welcher die Verbindungsstelle 4 rundum umschließt. Abschließend kann die Vakuumisolierung des Muffenkörpers 5 durch Evakuierung des Zwischenraums zwischen den den Muffenkörper 5 bildenden Metallrohren hergestellt werden.

## Patentansprüche

1. Vorrichtung (1) mit zwei supraleitfähigen Kabeln (2,3), die an einer Verbindungsstelle (4) elektrisch leitend miteinander verbunden sind, wobei jedes Kabel (2, 3) in einem rohrförmigen, zur Führung eines Kühlmittels dienenden Kabelkryostat (10, 11) angeordnet ist und einen elektrischen Leiter (6,7) sowie einen elektrischen Schirmleiter (8,9) aufweist, wobei die Verbindungsstelle (4) der beiden Kabel (2,3) von einem Muffenkryostat (5) umgeben ist, der die Kabelkryostate (10,11) der beiden Kabel (2,3) miteinander verbindet, **dadurch gekennzeichnet,**
- **dass** an den in der Verbindungsstelle (4) miteinander verbundenen Enden der elektrischen Leiter (6,7) jeweils ein Verbindungselement angebracht ist, wobei die beiden Verbindungselemente an der Verbindungsstelle (4) elektrisch leitend miteinander verbunden sind,
- **dass** die Verbindungsstelle (4) von einem einteiligen, als Rohr ausgeführten elektrischen Schirmkörper (14) umgeben ist, welcher die elektrischen Schirmleiter (8,9) der Kabel (2,3) miteinander verbindet und in welchen die Enden der elektrischen Leiter (6,7) zur Verbindung eingeführt sind, und
- **dass** der elektrische Schirmkörper (14) von dem vorgefertigten Muffenkryostat (5) umgeben ist, welcher eine thermische Isolierung aufweist.

2. Vorrichtung (1) nach Anspruch 1, **dadurch gekennzeichnet, dass** die thermische Isolierung des Muffenkryostats (5) eine Vakuumisolierung umfaßt.

3. Vorrichtung (1) nach Anspruch 1 oder 2, **dadurch gekennzeichnet, dass** eines der beiden Verbindungselemente ein Stecker und das andere der beiden Verbindungselemente eine Buchse ist.

4. Vorrichtung (1) nach Anspruch 1 oder 2, **dadurch gekennzeichnet, dass** die beiden Verbindungselemente Stecker sind, die innerhalb einer Hülse an der Verbindungsstelle (4) zusammengeführt sind.

5. Vorrichtung (1) nach Anspruch 1, **dadurch gekennzeichnet, dass** der Muffenkryostat (5) an seinen Enden jeweils an die Kabelkryostate (10,11) der beiden Kabel (2,3) angeflanscht ist.

6. Vorrichtung (1) nach Anspruch 1, **dadurch gekennzeichnet, daß** der Muffenkryostat (5) an seinen Enden jeweils mit den Kabelkryostaten (10, 11) der beiden Kabel (2,3) verschweißt ist.

7. Vorrichtung (1) nach Anspruch 1, **dadurch gekennzeichnet, dass** der Schirmkörper (14) aus einem metallischen Trägerrohr besteht, auf welchem von außen supraleitfähige Leiter aufgebracht sind.

8. Vorrichtung (1) nach Anspruch 1, **dadurch gekennzeichnet, dass** der Schirmkörper (14) aus einem nichtmetallischen Trägerrohr besteht, auf welchem von außen supraleitfähige Leiter aufgebracht sind.

9. Vorrichtung (1) nach einem der vorherigen Ansprüche, **dadurch gekennzeichnet, dass** der Schirmkörper (14) mittels Kontaktelementen mit den Schirmleitern (8,9) der supraleitfähigen Kabel (2,3) verbunden ist.

## Claims

1. A device (1) having two superconducting cables (2, 3), which are connected with each other electrically conductively at a connecting point (4), wherein each cable (2, 3) is arranged in a tubular cable cryostat (10, 11), which is used for conducting a coolant, and has an electrical conductor (6, 7) and an electrical shield conductor (8, 9), wherein the connecting point (4) of both cables (2, 3) is surrounded by a socket cryostat (5), which connects the cable cryostats (10, 11) of both cables (2, 3) with each other, **characterized in**
- **that** in each case a connecting element is applied to the ends of the electrical conductors (6, 7) connected with each other in the connecting point (4), wherein the two connecting elements are connected with each other electrically conductively at the connecting point (4),
- **that** the connecting point (4) is surrounded by a one-piece electrical shield body (14) designed as a tube, which connects the electrical shield conductors (8, 9) of the cables (2, 3) with each other and into which the ends of the electrical conductors (6, 7) are introduced for the connection, and
- **that** the electrical shield body (14) is surrounded by the pre-fabricated socket cryostat (5), which has a thermal insulation.

2. The device (1) according to Claim 1, **characterized in that** the thermal insulation of the socket cryostat (5) comprises a vacuum insulation.

3. The device (1) according to Claim 1 or 2, **characterized in that** one of the two connecting elements is a plug connector and the other of the two connecting elements is a plug socket.

4. The device (1) according to Claim 1 or 2, **characterized in that** the two connecting elements are plug connectors, which are brought together within a sleeve at the connecting point (4).

5. The device (1) according to Claim 1, **characterized in that** the socket cryostat (5) is flange-mounted on its ends in each case with the cable cryostats (10, 11) of the two cables (2, 3).

6. The device (1) according to Claim 1, **characterized in that** the socket cryostat (5) is welded on its ends in each case to the cable cryostats (10, 11) of the two cables (2, 3).

7. The device (1) according to Claim 1, **characterized in that** the shield body (14) consists of a metallic support tube, on which superconducting conductors are applied from the outside.

8. The device (1) according to Claim 1, **characterized in that** the shield body (14) consists of a non-metallic support tube, on which superconducting conductors are applied from the outside.

9. The device (1) according to any one of the preceding claims, **characterized in that** the shield body (14) is connected by means of contact elements with the shield conductors (8, 9) of the superconducting cables (2, 3).

## Revendications

1. Dispositif (1) avec deux câbles (2, 3) supraconducteurs, qui sont raccordés l'un à l'autre de façon électriquement conductrice au niveau d'un point de raccordement (4), chaque câble (2, 3) étant disposé dans un cryostat-câble (10, 11) tubulaire servant à guider un produit réfrigérant et comportant un conducteur électrique (6, 7) ainsi qu'un conducteur de blindage (8, 9) électrique, le point de raccordement (4) des deux câbles (2, 3) étant entouré d'un cryostat-manchon (5) qui raccorde l'un à l'autre les cryostats-câbles (10, 11) des deux câbles (2, 3), **caractérisé en ce que**
- au niveau des extrémités des conducteurs électriques (6, 7) raccordées l'une à l'autre au niveau du point de raccordement (4), il est mis en place respectivement un élément de raccordement, les deux éléments de raccordement étant raccordés l'un à l'autre de façon électriquement conductrice au niveau du point de raccordement (4),
- le point de raccordement (4) est entouré d'un élément de blindage (14) électrique d'une seule pièce réalisé en tant que tube qui raccorde l'un à l'autre les conducteurs de blindage (8, 9) électriques des câbles (2, 3) et dans lequel les extrémités des conducteurs électriques (6, 7) sont introduites pour le raccordement, et
- l'élément de blindage (14) électrique est entouré du cryostat-manchon (5) préfabriqué qui comporte une isolation thermique.

2. Dispositif (1) selon la revendication 1, **caractérisé en ce que** l'isolation thermique du cryostat-manchon (5) comprend une isolation sous vide.

3. Dispositif (1) selon la revendication 1 ou 2, **caractérisé en ce que** l'un des deux éléments de raccordement est une fiche et l'autre des deux éléments de raccordement est une prise.

4. Dispositif (1) selon la revendication 1 ou 2, **caractérisé en ce que** les deux éléments de raccordement sont des fiches qui sont réunies à l'intérieur d'une douille au niveau du point de raccordement (4).

5. Dispositif (1) selon la revendication 1, **caractérisé en ce que,** au niveau de ses extrémités, le cryostat-manchon (5) est bridé respectivement sur les cryostats-câbles (10, 11) des deux câbles (2, 3).

6. Dispositif (1) selon la revendication 1, **caractérisé en ce que,** au niveau de ses extrémités, le cryostat-manchon (5) est assemblé par soudage respectivement avec les cryostats-câbles (10, 11) des deux câbles (2, 3).

7. Dispositif (1) selon la revendication 1, **caractérisé en ce que** l'élément de blindage (14) se compose d'un tube porteur métallique sur lequel des conducteurs supraconducteurs sont montés à partir de l'extérieur.

8. Dispositif (1) selon la revendication 1, **caractérisé en ce que** l'élément de blindage (14) se compose d'un tube porteur non métallique sur lequel des conducteurs supraconducteurs sont montés à partir de l'extérieur.

9. Dispositif (1) selon l'une des revendications précédentes, **caractérisé en ce que** l'élément de blindage (14) est raccordé aux conducteurs de blindage (8, 9) des câbles (2, 3) supraconducteurs au moyen d'éléments de contact.
